# EUROPEAN PATENT SPECIFICATION

(11) **EP 2 532 209 B1**
(45) Date of publication and mention of the grant of the patent: **13.11.2013**
(21) Application number: 11703547.7
(22) Date of filing: 02.02.2011
(51) Int. Cl.: H04W 76/04, H04W 4/10, H04W 28/02, H04W 76/00

(54) **MANAGING DEDICATED CHANNEL RESOURCE ALLOCATION TO USER EQUIPMENT BASED ON RADIO BEARER TRAFFIC WITHIN A WIRELESS COMMUNICATIONS SYSTEM**
VERWALTUNG DER ZUWEISUNG VON DEDIZIERTEN KANALRESSOURCEN ZU EINEM BENUTZERGERÄT JE NACH FUNKTRÄGERVERKEHR IN EINEM DRAHTLOSEN KOMMUNIKATIONSSYSTEM
GESTION D'ATTRIBUTION DE RESSOURCES DE CANAL DÉDIÉ À UN ÉQUIPEMENT UTILISATEUR SUR LA BASE D'UN TRAFIC DE SUPPORT RADIO DANS UN SYSTÈME DE COMMUNICATIONS SANS FIL

(30) Priority: 18.01.2011 US 201113008213; 05.02.2010 US 301929 P
(43) Date of publication of application: 12.12.2012
(73) Proprietor: Qualcomm Incorporated, San Diego, CA 92121 (US)
(72) Inventor: SONG, Bongyong, San Diego, California 92121 (US); PALADUGU, Karthika, San Diego, California 92121 (US); LIN, Yih-Hao, San Diego, California 92121 (US); SANTHANAM, Arvind V., San Diego, California 92121 (US)
(74) Representative: Reedy, Orlaith
(86) International application number: PCT/US2011/023433
(87) International publication number: WO 2011/097272

(56) References cited:
- WO-A1-99/66748
- US-A1- 2002 173 326
- US-A1- 2005 141 471
- US-A1- 2007 177 628
- US-A1- 2010 015 974

## Description

### BACKGROUND OF THE INTENTION

### 1. Field of the Invention

Embodiments of the invention relate to managing dedicated channel resource allocation to user equipment based on radio bearer traffic within a wireless communications system.

### 2. Description of the Related Art

Wireless communication systems have developed through various generations, including a first-generation analog wireless phone service (1G), a second-generation (2G) digital wireless phone service (including interim 2.5G and 2.75G networks) and a third-generation (3G) high speed data / Internet-capable wireless service. There are presently many different types of wireless communication systems in use, including Cellular and Personal Communications Service (PCS) systems. Examples of known cellular systems include the cellular Analog Advanced Mobile Phone System (AMPS), and digital cellular systems based on Code Division Multiple Access (CDMA), Frequency Division Multiple Access (FDMA), Time Division Multiple Access (TDMA), the Global System for Mobile access (GSM) variation of TDMA, and newer hybrid digital communication systems using both TDMA and CDMA technologies.

The method for providing CDMA mobile communications was standardized in the United States by the Telecommunications Industry Association/Electronic Industries Association in TIA/EIA/IS-95-A entitled "Mobile Station-Base Station Compatibility Standard for Dual-Mode Wideband Spread Spectrum Cellular System," referred to herein as IS-95. Combined AMPS & CDMA systems are described in TIA/EIA Standard IS-98. Other communications systems are described in the IMT-2000/UM, or International Mobile Telecommunications System 2000/Universal Mobile Telecommunications System, standards covering what are referred to as wideband CDMA (W-CDMA), CDMA2000 (such as CDMA2000 1xEV-DO standards, for example) or TD-SCDMA.

In W-CDMA wireless communication systems, user equipments (UEs) receive signals from fixed position Node Bs (also referred to as cell sites or cells) that support communication links or service within particular geographic regions adjacent to or surrounding the base stations. Node Bs provide entry points to an access network (AN) / radio access network (RAN), which is generally a packet data network using standard Internet Engineering Task Force (IETF) based protocols that support methods for differentiating traffic based on Quality of Service (QoS) requirements. Therefore, the Node Bs generally interact with UEs through an over the air interface and with the RAN through Internet Protocol (IP) network data packets.

In wireless telecommunication systems, Push-to-talk (PTT) capabilities are becoming popular with service sectors and consumers. PTT can support a "dispatch" voice service that operates over standard commercial wireless infrastructures, such as W-CDMA, CDMA, FDMA, TDMA, GSM, etc. In a dispatch model, communication between endpoints (e.g., UEs) occurs within virtual groups, wherein the voice of one "talker" is transmitted to one or more "listeners." A single instance of this type of communication is commonly referred to as a dispatch call, or simply a PTT call. A PTT call is an instantiation of a group, which defines the characteristics of a call. A group in essence is defined by a member list and associated information, such as group name or group identification.
US 2005/0141471 discloses a method for controlling access bearer resources in a real time media communication with active and inactive periods.
US 2010/0015974 discloses a method and apparatus for reducing latency when setting up a Push to Talk (PTT) session from a UE in a WCDMA radio communication network.

### SUMMARY

In an embodiment, an access network monitors traffic, associated with a radio bearer of a given type (e.g., a radio bearer expected to be associated with delay-sensitive and/or high-priority communication sessions), between a user equipment (UE) in a dedicated-channel state (e.g., CELL_DCH state) and an application server that is arbitrating a communication session between the UE and at least one other UE. Based on the monitored traffic, the access network selectively transitions the UE away from the dedicated-channel state. For example, if traffic on the radio bearer of the given type is detected before expiration of a timer, the UE can be permitted to remaining in the dedicated-channel state. Alternatively, if no traffic on the radio bearer of the given type is detected before expiration of the timer, the UE can be transitioned away from the dedicated-channel state (e.g., into CELL_FACH, CELL_PCH or URA_PCH state).

### BRIEF DESCRIPTION OF THE DRAWINGS

A more complete appreciation of embodiments of the invention and many of the attendant advantages thereof will be readily obtained as the same becomes better understood by reference to the following detailed description when considered in connection with the accompanying drawings which are presented solely for illustration and not limitation of the invention, and in which:

FIG. 1 is a diagram of a wireless network architecture that supports user equipments and radio access networks in accordance with at least one embodiment of the invention.

FIG. 2A illustrates the core network of FIG. 1. according to an embodiment of the present invention.

FIG. 2B illustrates an example of the wireless communications system of FIG. 1 in more detail.

FIG. 3 is an illustration of user equipment in accordance with at least one embodiment of the invention.

FIG. 4A illustrates a process by which a given user equipment (UE) is transitioned between CELL_FACH state and CELL_DCH state by the an access network in accordance with at least one embodiment of the invention.

FIG. 4B illustrates a process of selectively transitioning an originating UE to CELL_DCH state in accordance with an embodiment of the invention.

FIG. 4C illustrates another process of selectively transitioning an originating UE to CELL_DCH state in accordance with an embodiment of the invention.

FIG. 4D illustrates a process of selectively transitioning a target UE to CELL_DCH state in accordance with an embodiment of the invention.

FIG. 4E illustrates a process of selectively transitioning a transmitting UE to CELL_DCH state in accordance with an embodiment of the invention.

FIG. 4F illustrates another process of selectively transitioning a transmitting UE to CELL_DCH state in accordance with an embodiment of the invention.

FIG. 4G illustrates another process of selectively transitioning a target UE to CELL_DCH state in accordance with an embodiment of the invention.

### DETAILED DESCRIPTION

Aspects of the invention are disclosed in the following description and related drawings directed to specific embodiments of the invention. Alternate embodiments may be devised without departing from the scope of the invention. Additionally, well-known elements of the invention will not be described in detail or will be omitted so as not to obscure the relevant details of the invention.

The words "exemplary" and/or "example" are used herein to mean "serving as an example, instance, or illustration." Any embodiment described herein as "exemplary" and/or "example" is not necessarily to be construed as preferred or advantageous over other embodiments. Likewise, the term "embodiments of the invention" does not require that all embodiments of the invention include the discussed feature, advantage or mode of operation.

Further, many embodiments are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects of the invention may be embodied in a number of different formes, all of which have been contemplated to be within the scope of the claimed subject matter. In addition, for each of the embodiments described herein, the corresponding form of any such embodiments may be described herein as, for example, "logic configured to" perform the described action.

A High Data Rate (HDR) subscriber station, referred to herein as user equipment (UE), may be mobile or stationary, and may communicate with one or more access points (APs), which may be referred to as Node Bs. A UE transmits and receives data packets through one or more of the Node Bs to a Radio Network Controller (RNC). The Node Bs and RNC are parts of a network called a radio access network (RAN). A radio access network can transport voice and data packets between multiple UEs.

The radio access network may be further connected to additional networks outside the radio access network, such core network including specific carrier related servers and devices and connectivity to other networks such as a corporate intranet, the Internet, public switched telephone network (PSTN), a Serving General Packet Radio Services (GPRS) Support Node (SGSN), a Gateway GPRS Support Node (GGSN), and may transport voice and data packets between each UE and such networks. A UE that has established an active traffic channel connection with one or more Node Bs may be referred to as an active UE, and can be referred to as being in a traffic state. A UE that is in the process of establishing an active traffic channel (TCH) connection with one or more Node Bs can be referred to as being in a connection setup state. A UE may be any data device that communicates through a wireless channel or through a wired channel. A UE may further be any of a number of types of devices including but not limited to PC card, compact flash device, external or internal mode, or wireless or wireline phone. The communication link through which the UE sends signals to the Node B(s) is called an uplink channel (e.g., a reverse traffic channel, a control channel, an access channel, etc.). The communication link through which Node B(s) send signals to a UE is called a downlink channel (e.g., a paging channel, a control channel, a broadcast channel, a forward traffic channel, etc.). As used herein the term traffic channel (TCH) can refer to either an uplink / reverse or downlink/forward traffic channel.

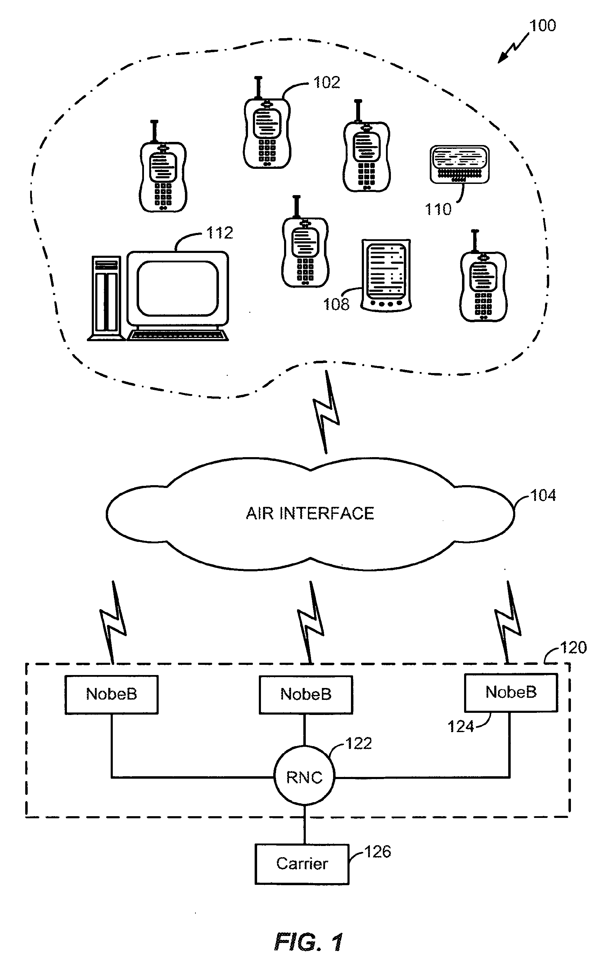

FIG. 1 illustrates a block diagram of one exemplary embodiment of a wireless communications system 100 in accordance with at least one embodiment of the invention. System 100 can contain UEs, such as cellular telephone 102, in communication across an air interface 104 with an access network or radio access network (RAN) 120 that can connect the access terminal 102 to network equipment providing data connectivity between a packet switched data network (e.g., an intranet, the Internet, and/or core network 126) and the UEs 102, 108, 110, 112. As shown here, the UE can be a cellular telephone 102, a personal digital assistant 108, a pager 110, which is shown here as a two-way text pager, or even a separate computer platform 112 that has a wireless communication portal. Embodiments of the invention can thus be realized on any form of access terminal including a wireless communication portal or having wireless communication capabilities, including without limitation, wireless modems, PCMCIA cards, personal computers, telephones, or any combination or sub-combination thereof. Further, as used herein, the term "UE" in other communication protocols (i.e., other than W-CDMA) may be referred to interchangeably as an "access terminal", "AT", "wireless device", "client device", "mobile terminal", "mobile station" and variations thereof.

Referring back to FIG. 1, the components of the wireless communications system 100 and interrelation of the elements of the exemplary embodiments of the invention are not limited to the configuration illustrated. System 100 is merely exemplary and can include any system that allows remote UEs, such as wireless client computing devices 102, 108, 110, 112 to communicate over-the-air between and among each other and/or between and among components connected via the air interface 104 and RAN 120, including, without limitation, core network 1.26, the Internet, PSTN, SGSN, SGSN and/or other remote servers.

The RAN 120 controls messages (typically sent as data packets) sent to a RNC 122. The RNC 122 is responsible for signaling, establishing, and tearing down bearer channels (i.e., data channels) between a Serving General Packet Radio Services (GPRS) Support Node (SGSN) and the UEs 102/108/110/112. If link layer encryption is enabled, the RNC 122 also encrypts the content before forwarding it over the air interface 104. The function of the RNC 122 is well-known in the art and will not be discussed further for the sake of brevity. The core network 126 may communicate with the RNC 122 by a network, the Internet and/or a public switched telephone network (PSTN). Alternatively, the RNC 122 may connect directly to the Internet or external network. Typically, the network or Internet connection between the core network 126 and the RNC 122 transfers data, and the PSTN transfers voice information. The RNC 122 can be connected to multiple Node Bs 124. In a similar manner to the core network 126, the RNC 122 is typically connected to the Node Bs 124 by a network, the Internet and/or PSTN for data transfer and/or voice information. The Node Bs 124 can broadcast data messages wirelessly to the UEs, such as cellular telephone 102. The Node Bs 124, RNC 122 and other components may form the RAN 120, as is known in the art. However, alternate configurations may also be used and the invention is not limited to the configuration illustrated. For example, in another embodiment the functionality of the RNC 122 and one or more of the Node Bs 124 may be collapsed into a single "hybrid" module having the functionality of both the RNC 122 and the Node B(s) 124.

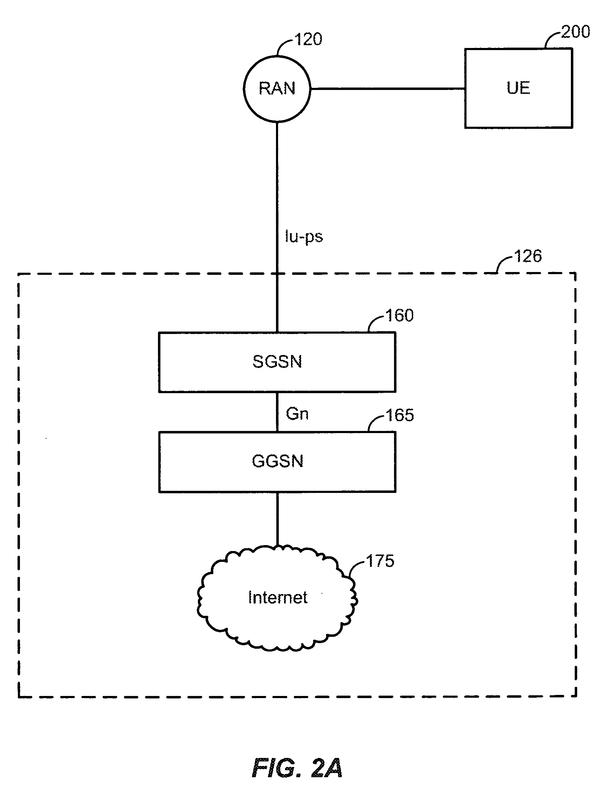

FIG. 2A illustrates the core network 126 according to an embodiment of the present invention. In particular, FIG. 2A illustrates components of a General Packet Radio Services (GPRS) core network implemented within a W-CDMA system. In the embodiment of FIG. 2A, the core network 126 includes a Serving GPRS Support Node (SGSN) 160, a Gateway GPRS Support Node (SGSN) 1.65 and an Internet 175. However, it is appreciated that portions of the Internet 175 and/or other components may be located outside the core network in alternative embodiments.

Generally, GPRS is a protocol used by Global System for Mobile communications (GSM) phones for transmitting Internet Protocol (IP) packets. The GPRS Core Network (e.g., the GGSN 165 and one or more SGSNs 160) is the centralized part of the GPRS system and also provides support for W-CDMA based 3G networks. The GPRS core network is an integrated part of the GSM core network, provides mobility management, session management and transport for IP packet services in GSM and W-CDMA networks.

The GPRS Tunneling Protocol (GTP) is the defining IP protocol of the GPRS core network. The GTP is the protocol which allows end users (e.g., access terminals) of a GSM or W-CDMA network to move from place to place while continuing to connect to the internet as if from one location at the GGSN 165. This is achieved transferring the subscriber's data from the subscriber's current SSGN 160 to the GGSN 165, which is handling the subscriber's session.

Three forms of GTP are used by the GPRS core network; namely, (i) GTP-U, (ii) GTP-C and (iii) GTP' (GTP Prime). GTP-U is used for transfer of user data in separated tunnels for each packet data protocol (PDP) context. GTP-C is used for control signaling (e.g., setup and deletion of PDP contexts, verification of GSN reach-ability, updates or modifications such as when a subscriber moves from one SGSN to another, etc.). GTP is used for transfer of charging data from GSNs to a charging function.

Referring to FIG. 2A, the GGSN 165 acts as an interface between the GPRS backbone network (not shown) and the external packet data network 175. The SGSN 165 extracts the packet data with associated packet data protocol (PDP) format (e.g., IP or PPP) from the GPRS packets coming from the SGSN 160, and sends the packets out on a corresponding packet data network. In the other direction, the incoming data packets are directed by the SGSN 165 to the SGSN 160 which manages and controls the Radio Access Bearer (RAB) of the destination UE served by the RAN 120. Thereby, the GGSN 165 stores the current SGSN address of the target UE and his/her profile in its location register (e.g., within a PDP context). The GGSN is responsible for IP address assignment and is the default router for the connected UE. The GGSN also performs authentication and charging functions.

The SGSN 160 is representative of one of many SGSNs within the core network 126, in an example. Each SGSN is responsible for the delivery of data packets from and to the UEs within an associated geographical service area. The tasks of the SGSN 160 includes packet routing and transfer, mobility management (e.g., attach/detach and location management), logical link management, and authentication and charging functions. The location register of the SGSN stores location information (e.g., current cell, current VLR) and user profiles (e.g., IMSI, PDP address(es) used in the packet data network) of all GPRS users registered with the SGSN 160, for example, within one or more PDP contexts for each user or UE. Thus, SGSNs are responsible for (i) de-tunneling downlink GTP packets from the GGSN 165, (ii) uplink tunnel IP packets toward the GGSN 165, (iii) carrying out mobility management as UEs move between SGSN service areas and (iv) billing mobile subscribers. As will be appreciated by one of ordinary skill in the art, aside from (i) - (iv), SGSNs configured for GSM/EDGE networks have slightly different functionality as compared to SGSNs configured for W-CDMA networks.

The RAN 120 (e.g., or UTRAN, in Universal Mobile Telecommunications System (UMTS) system architecture) communicates with the SGSN 160 via an Iu interface, with a transmission protocol such as Frame Relay or IP. The SGSN 160 communicates with the GGSN 165 via a Gn interface, which is an IP-based interface between SGSN 160 and other SGSNs (not shown) and internal GGSN, and uses the GTP protocol defined above (e.g., GTP-U, GTP-C, GTP', etc.). While not shown in FIG. 2A, the Gn interface is also used by the Domain Name System (DNS). The GGSN 165 is connected to a Public Data Network (PDN) (not shown), and in turn to the Internet 175, via a Gi interface with IP protocols either directly or through a Wireless Application Protocol (WAP) gateway.

The PDP context is a data structure present on both the SGSN 160 and the GGSN 165 which contains a particular UE's communication session information when the UE has an active GPRS session. When a UE wishes to initiate a GPRS communication session, the UE must first attach to the SGSN 160 and then activate a PDP context with the GGSN 165. This allocates a PDP context data structure in the SGSN 160 that the subscriber is currently visiting and the GGSN 165 serving the UE's access point.

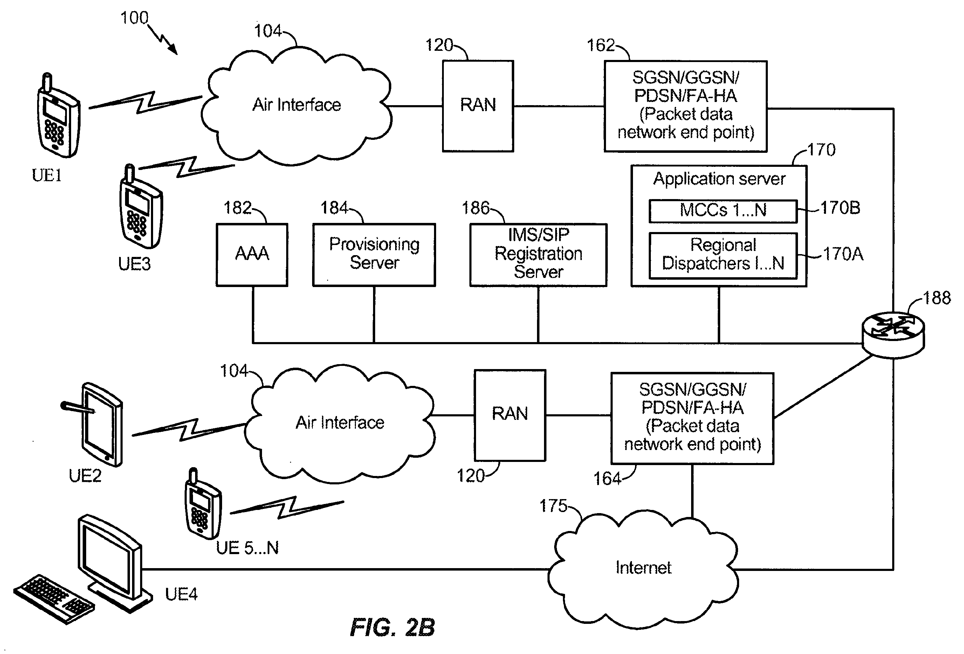

FIG. 2B illustrates an example of the wireless communications system 100 of FIG. 1 in more detail. In particular, referring to FIG. 2B, UEs 1...N are shown as connecting to the RAN 120 at locations serviced by different packet data network end-points. The illustration of FIG. 2B is specific to W-CDMA systems and terminology, although it will be appreciated how FIG. 2B could be modified to confirm with a 1x EV-DO system. Accordingly, UEs 1 and 3 connect to the RAN 120 at a portion served by a first packet data network end-point 162 (e.g., which may correspond to SGSN, GGSN, PDSN, a home agent (HA), a foreign agent (FA), etc.). The first packet data network end-point 162 in turn connects, via the routing unit 188, to the Internet 175 and/or to one or more of an authentication, authorization and accounting (AAA) server 182, a provisioning server 184, an Internet Protocol (IP) Multimedia Subsystem (IMS) / Session Initiation Protocol (SIP) Registration Server 186 and/or the application server 170. UEs 2 and 5...N connect to the RAN 120 at a portion served by a second packet data network end-point 164 (e.g., which may correspond to SGSN, GGSN, PDSN, FA, HA, etc.). Similar to the first packet data network end-point 162, the second packet data network end-point 164 in turn connects, via the routing unit 188, to the Internet 175 and/or to one or more of the AAA server 182, a provisioning server 184, an IMS / SIP Registration Server 186 and/or the application server 170. UE 4 connects directly to the Internet 175, and through the Internet 175 can then connect to any of the system components described above.

Referring to FIG. 2B, UEs 1, 3 and 5....N are illustrated as wireless cell-phones, UE 2 is illustrated as a wireless tablet-PC and UE 4 is illustrated as a wired desktop station. However, in other embodiments, it will be appreciated that the wireless communication system 100 can connect to any type of UE, and the examples illustrated in FIG. 2B are not intended to limit the types of UEs that may be implemented within the system. Also, while the AAA 182, the provisioning server 184, the IMS/SIP registration server 186 and the application server 170 are each illustrated as structurally separate scrvcrs, one or more of these servers may be consolidated in at least one embodiment of the invention.

Further, referring to FIG. 2B, the application server 170 is illustrated as including a plurality of media control complexes (MCCs) 1...N 170B, and a plurality of regional dispatchers 1...N 170A. Collectively, the regional dispatchers 170A and MCCs 170B are included within the application server 170, which in at least one embodiment can correspond to a distributed network of servers that collectively functions to arbitrate communication sessions (e.g., half-duplex group communication sessions via IP unicasting and/or IP multicasting protocols) within the wireless communication system 100. For example, because the communication sessions arbitrated by the application server 170 can theoretically take place between UEs located anywhere within the system 100, multiple regional dispatchers 170A and MCCs are distributed to reduce latency for the arbitrated communication sessions (e.g., so that a MCC in North America is not relaying media back-and-forth between session participants located in China). Thus, when reference is made to the application server 170, it will be appreciated that the associated functionality can be enforced by one or more of the regional dispatchers 170A and/or one or more of the MCCs 170B. The regional dispatchers 170A are generally responsible for any finctionality related to establishing a communication session (e.g., handling signaling messages between the UEs, scheduling and/or sending announce messages, etc.), whereas the MCCs 170B are responsible for hosting the communication session for the duration of the call instance, including conducting an in-call signaling and an actual exchange of media during an arbitrated communication session.

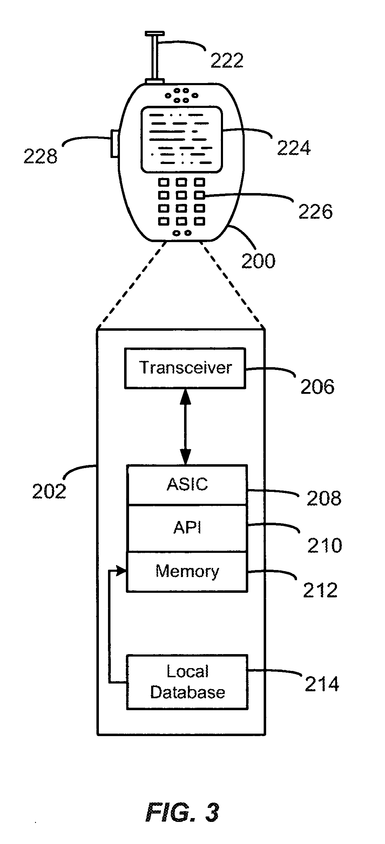

Referring to FIG. 3, a UE 200, (here a wireless device), such as a cellular telephone, has a platform 202 that can receive and execute software applications, data and/or commands transmitted from the RAN 120 that may ultimately come from the core network 126, the Internet and/or other remote servers and networks. The platform 202 can include a transceiver 206 operably coupled to an application specific integrated circuit ("ASIC" 208), or other processor, microprocessor, logic circuit, or other data processing device. The ASIC 208 or other processor executes the application programming interface ("API') 210 layer that interlaces with any resident programs in the memory 212 of the wireless device. The memory 212 can be comprised of read-only or random-access memory (RAM and ROM), EEPROM, flash cards, or any memory common to computer platforms. The platform 202 also can include a local database 214 that can hold applications not actively used in memory 212. The local database 214 is typically a flash memory cell, but can be any secondary storage device as known in the art, such as magnetic media, EEPROM, optical media, tape, soft or hard disk, or the like. The internal platform 202 components can also be operably coupled to external devices such as antenna 222, display 224, push-to-talk button 228 and keypad 226 among other components, as is known in the art.

Accordingly, an embodiment of the invention can include a UE including the ability to perform the functions described herein. As will be appreciated by those skilled in the art, the various logic elements can be embodied in discrete elements, software modules executed on a processor or any combination of software and hardware to achieve the functionality disclosed herein. For example, ASIC 208, memory 212, AP1 210 and local database 214 may all be used cooperatively to load, store and execute the various functions disclosed herein and thus the logic to perform these functions may be distributed over various elements. Alternatively, the functionality could be incorporated into one discrete component. Therefore, the features of the UE 200 in FIG. 3 are to be considered merely illustrative and the invention is not limited to the illustrated features or arrangement.

The wireless communication between the UE 102 or 200 and the RAN 120 can be based on different technologies, such as code division multiple access (CDMA), W-CDMA, time division multiple access (TDMA), Frequency division multiple access (FDMA), Orthogonal Frequency Division Multiplexing (OFDM), the Global System for Mobile Communications (GSM), or other protocols that may be used in a wireless communications network or a data communications network. For example, in W-CDMA, the data communication is typically between the client device 102, Node B(s) 124, and the RNC 122. The RNC 122 can be connected to multiple data networks such as the core network 126, PSTN, the Internet, a virtual private network, a SGSN, a GGSN and the like, thus allowing the UE 102 or 200 access to a broader communication network. As discussed in the foregoing and known in the art, voice transmission and/or data can be transmitted to the UEs from the RAN using a variety of networks and configurations. Accordingly, the illustrations provided herein are not intended to limit the embodiments of the invention and are merely to aid in the description of aspects of embodiments of the invention.

Below, embodiments of the invention are generally described in accordance with W-CDMA protocols and associated terminology (e.g., such as UE instead of mobile station (MS), mobile unit (MU), access terminal (AT), etc., RNC, contrasted with BSC in EV-DO, or Node B, contrasted with BS or MPT/BS in EV-DO, etc.). However, it will be readily appreciated by one of ordinary skill in the art how the embodiments of the invention can be applied in conjunction with wireless communication protocols other than W-CDMA.

In a conventional server-arbitrated communication session (e.g., via half-duplex protocols, full-duplex protocols, VoIP, a group session over IP unicast, a group session over IP multicast, a push-to-talk (PTT) session, a push-to-transfer (PTX) session, etc.), a session or call originator sends a request to initiate a communication session to the application server 170, which then forwards a call announcement message to the RAN 120 for transmission to one or more targets of the call.

User Equipments (UEs), in a Universal Mobile Telecommunications Service (UMTS) Terrestrial Radio Access Network (UTRAN) (e.g., the RAN 120) may be in either an idle mode or a radio resource control (RRC) connected mode.

Based on UE mobility and activity while in a RRC connected mode, the RAN 120 may direct UEs to transition between a number of RRC sub-states; namely, CELL PCH, URA_PCH, CELL_FACH, and CELL_DCH states, which may be characterized as follows:
- In the CELL_DCH state, a dedicated physical channel is allocated to the UE in uplink and downlink, the UE is known on a cell level according to its current active set, and the UE has been assigned dedicated transport channels, downlink and uplink (TDD) shared transport channels, and a combination of these transport channels can be used by the UE.
- In the CELL_FACH state, no dedicated physical channel is allocated to the UE, the UE continuously monitors a forward access channel (FACH), the UE is assigned a default common or shared transport channel in the uplink (e.g., a random access channel (RACH), which is a contention-based channel with a power ramp-up procedure to acquire the channel and to adjust transmit power) that the UE can transmit upon according to the access procedure for that transport channel, the position of the UE is known by RAN 120 on a cell level according to the cell where the UE last made a previous cell update, and, in TDD mode, one or several USCH or DSCH transport channels may have been established.
- In the CELL__PCH state, no dedicated physical channel is allocated to the UE, the UE selects a PCH with the algorithm, and uses DRX for monitoring the selected PCH via an associated PICH, no uplink activity is possible and the position of the UE is known by the RAN 120 on cell level according to the cell where the UE last made a cell update in CELL_FACH state.
- In the URA_PCH state, no dedicated channel is allocated to the UE, the UE selects a PCH with the algorithm, and uses DRX for monitoring the selected PCH via an associated PICH, no uplink activity is possible, and the location of the UE is known to the RAN 120 at a Registration area level according to the OUTRAN registration area (URA) assigned to the UE during the last URA update in CELL_FACH state.

Accordingly, URA_PCH State (or CELL_PCH State) corresponds to a dormant state where the UE periodically wakes up to check a paging indicator channel (PICH) and, if needed, the associated downlink paging channel (PCH), and it may enter CELL_FACH state to send a Cell Update message for the following event: cell reselection, periodical cell update, uplink data transmission, paging response, re-entered service area. In CELL_FACH State, the UE may send messages on the random access channel (RACH), and may monitor a forward access channel (FACH). The FACH carries downlink communication from the RAN 120, and is mapped to a secondary common control physical channel (S-CCPCH). From CELL_FACH State, the UE may enter CELL_DCH state after a traffic channel (TCH) has been obtained based on messaging in CELL_FACH state. A table showing conventional dedicated traffic channel (DTCH) to transport channel mappings in radio resource control (RRC) connected mode, is in Table 1 as follows:

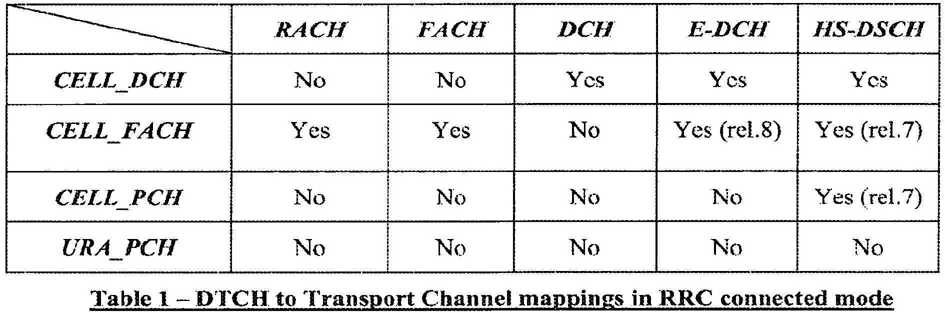

wherein the notations (rel. 8) and (rel. 7) indicate the associated 3GPP release where the indicated channel was introduced for monitoring or access.

Communication sessions arbitrated by the application server 170, in at least one embodiment, may be associated with delay-sensitive or high-priority applications and/or services. For example, the application server 170 may correspond to a PTT server in at least one embodiment, and it will be appreciated that an important criterion in PTT sessions is fast session set-up as well as maintaining a given level of Quality of Service (QoS) throughout the session.

As discussed above, in RRC connected mode, a given UE can operate in either CELL_DCH or CELL_FACH to exchange data with the RAN 120, through which the given UE can reach the application server 170. As noted above, in CELL_DCH state, uplink/downlink Radio bearers will consume dedicated physical channel resources (e.g., UL DCH, DL DCH, E-DCH, F-DPCH, HS-DPCCH etc). Some of these resources are even consumed for high speed shared channel (i.e., HSDPA) operations. In CELL_FACH state, uplink/downlink Radio bearers will be mapped to common transport channels (RACH/FACH). Thereby, in CELL_FACH state there is no consumption of dedicated physical channel resources.

Conventionally, the RAN 120 transitions the given UE between CELL_FACH and CELL_DCH based substantially on traffic volume, which is either measured at the RAN 120 (e.g., at the serving RNC 122 at the RAN 120) or reported from the given UE itself in one or more measurement reports. Specifically, the RAN 120 can conventionally be configured to transition a particular UE to CELL_DCH state from CELL_FACH state when the UE's associated traffic volume as measured and/or reported in the uplink or as measured and/or reported in the downlink is higher than the one or more of the Event 4a thresholds used by the RAN 120 for making CELL_DCH state transition decisions.

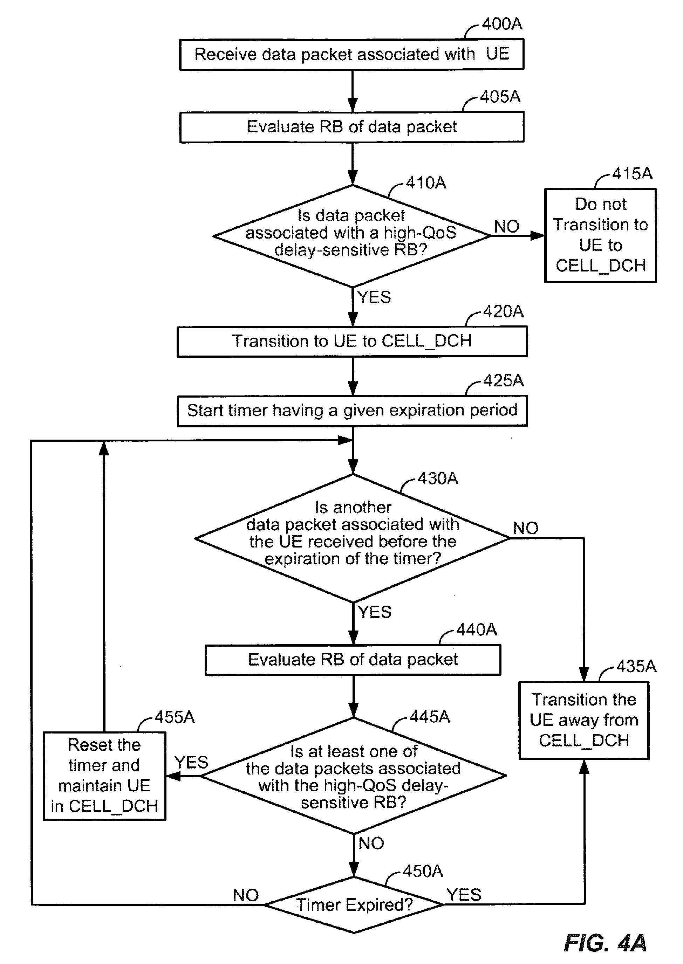

However, a substantial amount of trafic that travels to or from the application server 170 can be delay-sensitive (c.g., high QoS requirements to reduce latency, jitter, etc.) while having insufficient traffic volume for triggering the CELL_DCH transition of the UE. Accordingly, in at least one embodiment of the invention, the RAN 120 can be configured to transition a UE to CELL_DCH state whenever the RAN 120 either (i) receives one or more data packets on the downlink for the specified Radio Access Bearer (RAB) (or the corresponding RB) from the application server 170 intended for the UE, or (ii) receives one or more data packets from the UE on the uplink for the specified RB intended for the application server 170, as will be described below with respect to FIGS. 4A through 4F.

A process by which a given UE is transitioned between CELL_FACH state and CELL_DCH state by the RAN 120 (e.g., by a serving RNC of the RAN 120) is described with respect to FIG. 4A. In particular, FIG. 4A (as well as other FIGS. described below) illustrates a UE-state transition process wherein the system 100 corresponds to a Universal Mobile Telecommunications System (UMTS) that uses Wideband Code Division Multiple Access (W-CDMA) in accordance with an embodiment of the invention. However, it will be appreciated by one of ordinary skill in the art how FIG. 4A (and other FIGS. described below) can be directed to communication sessions in accordance with protocols other than W-CDMA. Further, certain signaling messages referred to herein are described whereby the application server 170 corresponds to a PTT server. However, it will be appreciated that other embodiments can be directed to servers providing services other than PTT to UEs of the system 100 (e.g., push-to-transfer (PTX) services, VoIP services, group-text sessions, etc.). Accordingly, embodiments of the invention are directed to any service that will benefit from high QoS and/or is otherwise delay-sensitive where a normal traffic-volume for the service would not necessarily exceed an Event 4a TVM threshold so as to cause a CELL_DCH transition of an associated UE.

Referring to FIG. 4A, the RAN 120 (e.g., a serving RNC of the RAN 120) receives a data packet associated with a given UE, 400A. In an example, the received data packet can be received from the application server 170 and can be intended for the given UE, in which case the given UE corresponds to a target UE of the data packet. In an alternative example, the received data packet can be received from the given UE and can be intended for the application server 170, in which case the given UE corresponds to an originating UE of the data packet.

Upon receiving the data packet in 400A, the RAN 120 evaluates the RB of the data packet in order to determine whether the data packet is associated with a high QoS and/or delay-sensitive RB, 405A. In 410A, if the RAN 120 determines that the data packet is not associated with a high QoS RB, the RAN 120 does not transition the given UE associated with the data packet to CELL_DCH state, 415A. Otherwise, if the RAN 120 determines that the data packet is associated with a high QoS RB, the RAN 120 transitions the given UE associated with the data packet to CELL_DCH state, 420A.

Upon detection that a data packet is received that triggers a CELL_DCH state transition of the given UE, the RAN 120 also starts a timer having a given expiration period, 425A. The given expiration period corresponds to a period during which the given UE is permitted to remain in CELL_DCH state, even if the given UE's traffic volume would not normally permit the UE to remain in CELL_DCH state. While the timer-initiation of 425A is shown as occurring after the CELL_DCH transition of 420A, it will be appreciated that the order of these operations can be reversed or performed concurrently in other embodiments of the invention.

After starting the timer in 425A, the RAN 120 determines whether another data packet associated with the given UE (e.g., either intended for transmission to the UE or received from the given UE) is received at the RAN 120 before expiration of the timer, 430A. If no data packets are received before expiration of the timer, the RAN 120 transitions the given UE away from CELL_DCH state (e.g., back to CELL_FACH slate, to CELL_PCH or URA_PCH state, etc.), 435A. Otherwise, if a data packet is received before expiration of the timer, the RAN 120 evaluates the RB of the data packet in order to determine whether the data packet is associated with a high QoS and/or delay-sensitive RB in 440A, similar to the evaluation of the previous data packet from 405A.

In 445A, if the RAN 120 determines that the data packet is not associated with a high QoS RB, the RAN 120 determines whether the timer is expired, 450A. If the RAN 120 determines that the timer has expired in 450A, the RAN 120 transitions the given UE away from CELL_DCH state, 435A. Otherwise, if the RAN 120 determines that the timer has not expired, the process returns to 430A and the timer (which has not been reset) continues to run. Returning to 445A, if the RAN 120 determines that the data packet is associated with a high QoS RB, the RAN 120 resets the timer and maintains the given UE in CELL_DCH state, 455A, after which the process returns to 430A and the timer (which has been reset) continues to run.

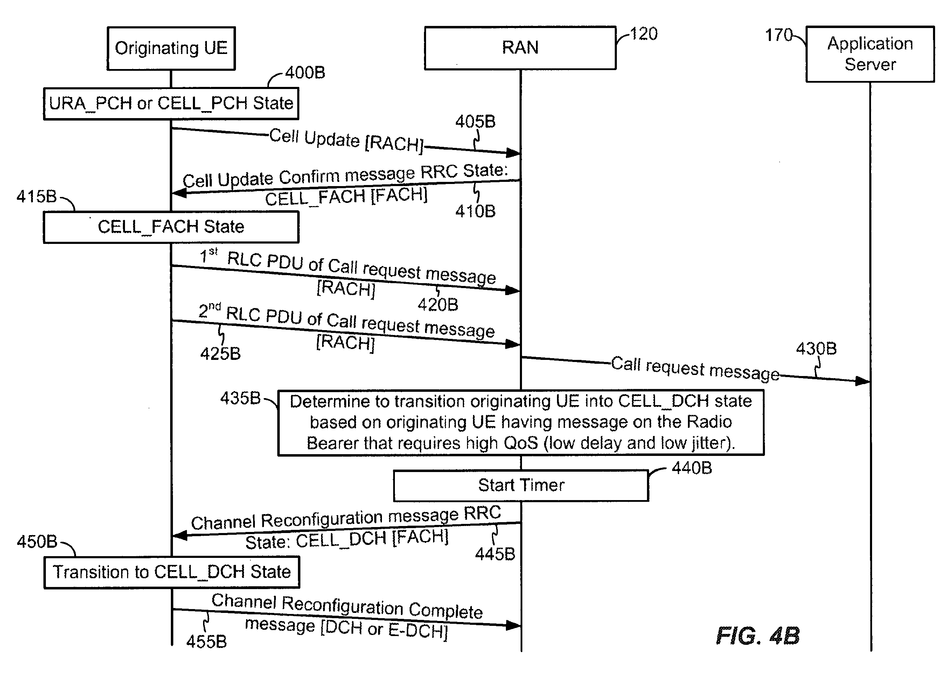

FIG. 4B illustrates a process of transitioning an originating UE to CELL_DCH state in accordance with an embodiment of the invention. In particular, FIG. 4B illustrates one example implementation of the process of FIG. 4A.

Referring to FIG. 4B, assume that a given UE ("originating UE") is operating in either URA_PCH or CELL_PCH state, 400B, and that the given UE performs a cell update procedure, 405B and 410B, and thereby transitions to CELL_FACH state after the cell update procedure, 415B. While in CELL_FACH state, the given UE determines to initiate a communication session to be arbitrated by the application server 170 (e.g., in response to a user of the given UE pressing a PIT button), and thereby the given UE transmits Radio Link Control (RLC) Packet Data Units (PDUs) of a call request message on the RACH to the RAN 120, 420B and 425B. The RAN 120 receives the RLC PDUs of the call request message on the RACH from the given UE in 420B and 425B, and forwards the call request message to the application server 170, 430B.

In the embodiment of FIG. 4B, in an example, the transmission of 420B corresponds to a first RLC PDU for CALL REQUEST, and the transmission of 425B corresponds to a second RLC PDU for CALL REQUEST. In an example, the given UE can be configured to transmit multiple RLC PDUs for a call request message at a given interval in different over-the-air (OTA) transmissions due to the size of the call request message. The RAN 120 will then consolidate the multiple RLC PDUs of the call request message to send a single call request message over a wired link to the application server 170 in 430B.

As will be appreciated, receipt of the second RLC PDU of the call request message in 425B corresponds to the data packet received in 400A of FIG. 4A in the embodiment of FIG. 4B. Accordingly, upon receiving the call request message from the given UE (or receiving the final RLC PDU of the call request message), the RAN 120 evaluates the call request message (e.g., by checking an associated RB identifier (ID)) and determines that the call request message is associated with an RB that requires high QoS (e.g., low-delay and low jitter) in 435B (e.g., as in 405A of FIG. 4A).

For example, the RAN 120 can be pre-configured to know that the RB ID of the call request message is associated with high-QoS, for example, by virtue of the RB's association with the application server 170 that provides QoS-intensive services, such as PTT. As noted above, the RB ID may be preconfigured at the RAN 120 such that the RB ID of the application server 170 is mapped to an indication of high QoS. The determination of the RAN 120 (e.g., specifically, the serving RNC of the RAN 120) that the given UE is sending a packet on the RAB (to the application server 170) functions to trigger a transition of the given UE to CELL_DCH state.

Accordingly, the RAN 120 starts a timer having a given expiration period, 440B, (e.g., as in 425A of FIG. 4A) and then facilitates a transition of the given UE to CELL_DCH state by transmitting a channel reconfiguration message to the given UE over the FACH, 445B. As will be appreciate, the channel reconfiguration message could be configured as a Radio Bearer (RB) Reconfiguration message, a Transport Channel (TCH) Reconfiguration message or a Physical Channel (PhyCh) Reconfiguration message, based on whether the Radio Bearer, Transport Channel or Physical Channel is the higher layer of the given UE to be reconfigured.

Upon receiving the channel reconfiguration message of 445B, the given UE transitions from the CELL_FACH state to the CELL_DCH state, 450B. While not shown in FIG. 4B, the transition of 450B may include decoding the channel reconfiguration message, an L1 synchronization procedure, etc. The given UE then responds to the channel reconfiguration message by sending a channel reconfiguration complete message on the reverse-link DCH or E-DCH to the RAN 120, 455B.

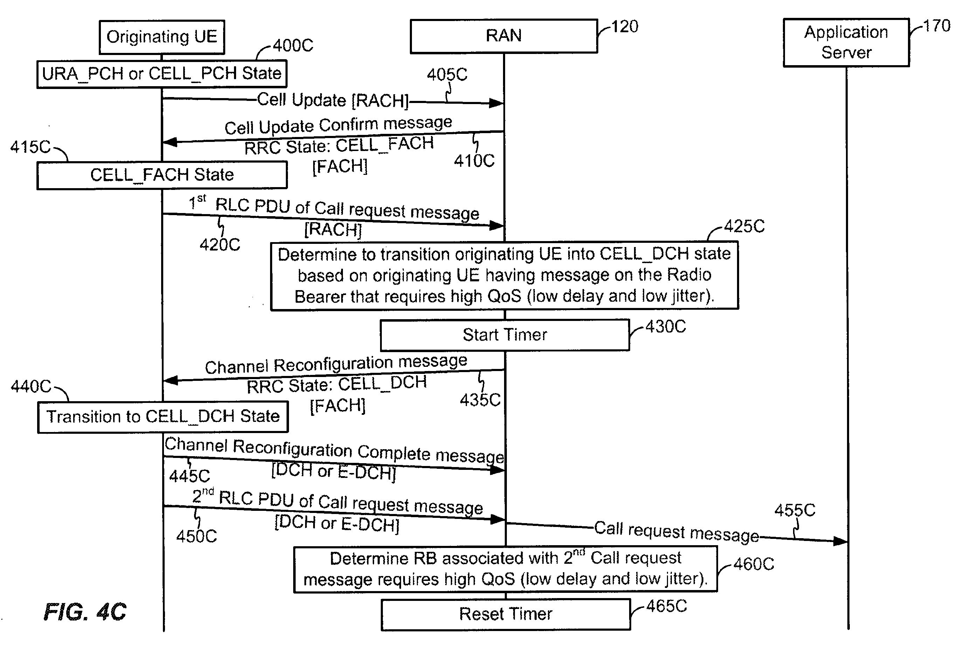

FIG. 4C illustrates a process of transitioning an originating UE to CELL_DCH state in accordance with another embodiment of the invention. In particular, FIG. 4C illustrates another example implementation of the process of FIG. 4A.

Referring to FIG. 4C, 400C through 420C correspond to 400B through 420B, respectively, of FIG. 4B, and as such will not be described further for the second of brevity. In the embodiment of FIG. 4C, assume that the transmission of the second RLC PDU of the call request message, which is shown as occurring at 425B in FIG. 4B, does not yet occur at this point. For example, the serving RNC of the RAN 120 may be able to process the first RLC PDU of the call request message with sufficient speed so that the RAN 120 responds to the first RLC PDU of the call request message before the second RLC PDU of the call request message is sent by the originating UE.

Accordingly, before the second RLC PDU of the call request message is transmitted, 425C through 445C are performed next, whereby 425C through 445C correspond to 435B through 455B of FIG. 4B, respectively. At this point, after the given UE is transitioned to CELL_DCH state, the given UE transmits the second RLC PDU of the call request message in 450C. Because the given UE is now in CELL_DCH state, the transmission of 450C occurs on the reverse-link DCH or E-DCH. After receiving the second RLC PDU of the call request message in 450C, the RAN 120 forwards the call request message to the application server 170, 455C. At this point, the RAN 120 also evaluates the call request message of and determines the call request message to be mapped to the RB-ID of the application server 170, 460C, and the RAN 120 resets the timer, 465C (e.g., as in 440A, 445A and 455.A of FIG. 4A).

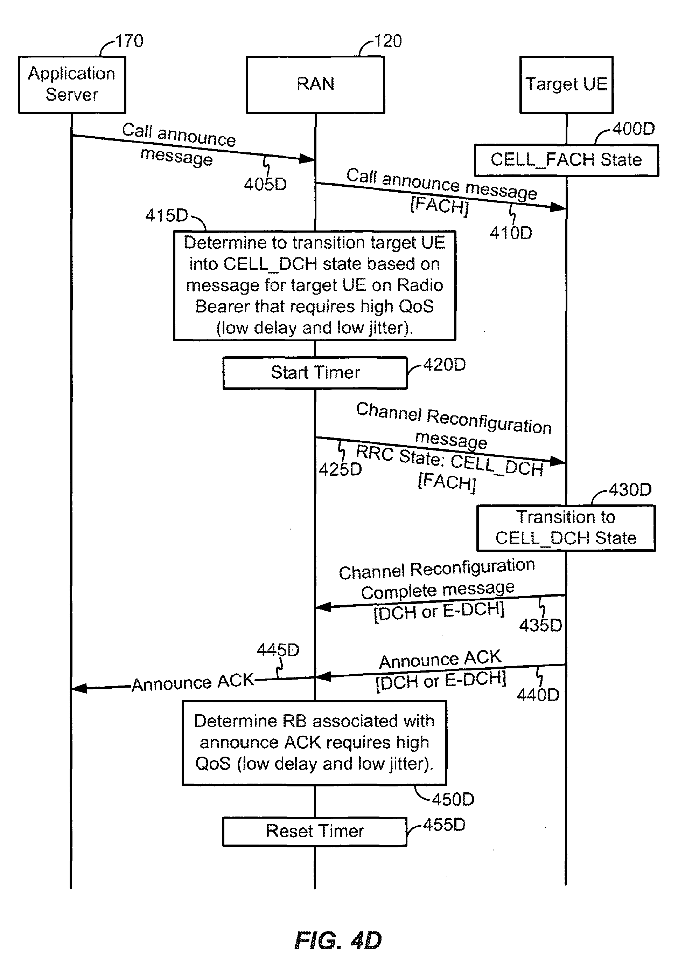

While FIGS. 4B and 4C are related to a transition of an originating UE to CELL_DCH state responsive to traffic between the originating UE and the application server 170, FIG. 4D is directed to a transition of a target UE to CELL_DCH state when the application server 170 has data (e.g., an announce message) to send to the target UE.

Referring to FIG. 4D, assume that the application server 170 has been requested to initiate a communication session to a given UE ("target UE"), and that the target UE is operating in CELL_FACH state, 400D. As will be appreciated, in an alternative embodiment where the target UE is not yet in CELL_FACH state, the target UE can be paged and transitioned to CELL_FACH state via a cell update procedure. Accordingly, the application server 170 sends a call announce message to the RAN 120, 405D, and the RAN 120 transmits the call announce message to the target UE on the FACH. Upon receiving the call announce message from the application server 170, the RAN 120 also evaluates the call announce message (e.g., by checking an associated RB ID) and determines that the call announce message is associated with an RB that requires high QoS (e.g., low-delay and low jitter) in 415C (e.g., as in 405A of FIG. 4A).

For example, the RAN 120 can be pre-configured to know that the RB ID of the call announce message is associated with high-QoS, for example, by virtue of the RB's association with the application server 170 that provides QoS-intensive services, such as PTT. As noted above, the RB ID may be preconfigured at the RAN 120 such that the RB ID of the application server 170 is mapped to an indication of high QoS. The determination of the RAN 120 (e.g., specifically, the serving RNC of the RAN 120) that the application server 170 is sending a packet on the RAB (of the application server 170) functions to trigger a transition of the target UE to CELL_DCH state.

Accordingly, the RAN 120 starts a timer having a given expiration period, 420D, (e.g., as in 425A of FIG. 4A) and then facilitates a transition of the given UE to CELL_DCH state by transmitting a channel reconfiguration message to the given UE over the FACH, 425D. As will be appreciated, the channel reconfiguration message could be configured as a Radio Bearer (RB) Reconfiguration message, a Transport Channel (TCH) Reconfiguration message or a Physical Channel (PhyCh) Reconfiguration message, based on whether the Radio Bearer, Transport Channel or Physical Channel is the higher layer of the given UE to be preconfigured.

Upon receiving the channel reconfiguration message of 425D, the given UE transitions from the CELL_FACH state to the CELL_DCH state, 430D. While not shown in FIG. 4D, the transition of 430D may include decoding the channel reconfiguration message, an L1 synchronization procedure, etc. The given UE then responds to the channel reconfiguration message by sending a channel reconfiguration complete message on the reverse-link DCH or E-DCH to the RAN 120, 435D. The given UE then sends an announce ACK message to the RAN 120 on the reverse-link DCH or E-DCH, 440D, and the RAN 120 forwards the announce ACK message to the application server 170, 445D. The RAN 120 also evaluates the announce ACK message of 440D and determines the announce ACK message to be mapped to the RB-ID of the application server 170, 450D, and the RAN 120 resets the timer, 455D (e.g., as in 440A, 445A and 455A of FIG. 4A).

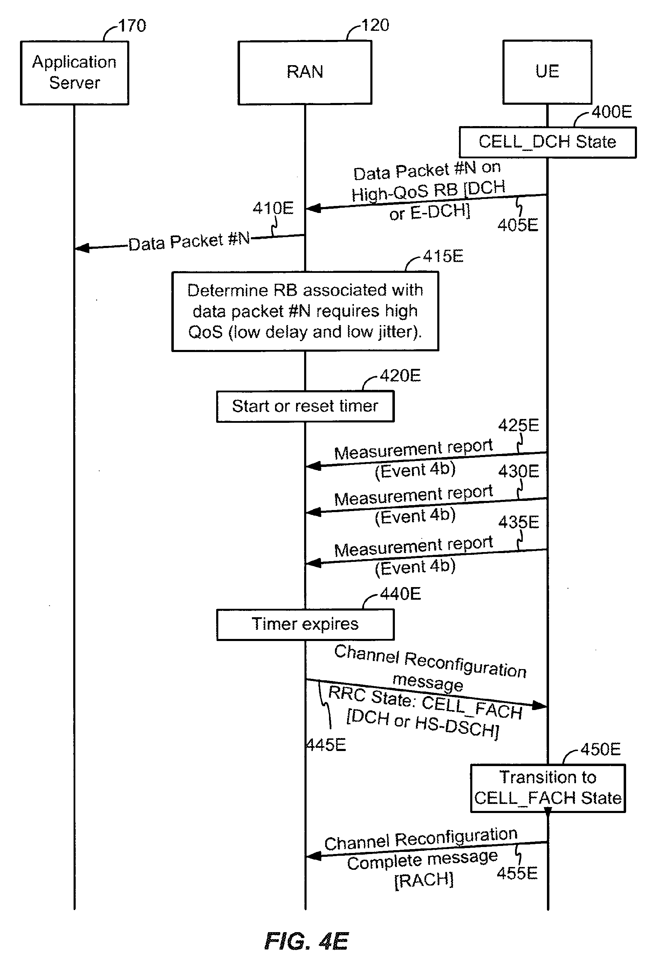

FIGS. 4E - 4G illustrate example implementations of FIG. 4A whereby, during a communication session between a given UE (e.g., either a target UE or originating UE) and the application server 170, the RAN 120 evaluates data packets exchanged therebetween in conjunction with monitoring a timer to selectively transition the given UE between CELL_FACH state and CELL_DCH state.

Referring to FIG. 4E, assume that the given UE is already in CELL_DCH state and engaged in a communication session with the application server 170, 400E. Accordingly, the given UE transmits a data packet #N on the reverse-link DCH or E-DCH on a high-QoS RB (e.g., an RB associated with the application server 170), 405E. The RAN 120 receives data packet #N and forwards data packet #N to the application server 170, 410E.

The RAN 120 also evaluates data packet #N of 405E and determines data packet #N to be mapped to the RB-ID of the application server 170, 415E, and the RAN 120 thereby either starts or resets the timer, 420E, as in FIG. 4A. For example, if the given UE is an originating UE and data packet #N corresponds to an initial call request message, then 420E corresponds to starting the timer as in 425A of FIG. 4A. In another example, if a CELL_DCH transition-timer is already running for the given UE based on a previous data packet, then 420E corresponds to resetting the timer as in 455A of FIG. 4A.

Next, the given UE transmits periodic measurement reports for (Event 4b), that are indicative of uplink traffic volume being below a given threshold, from the given UE, 425E, 430E and 435E. However, no actual data packets are sent to or from the given UE during this period. So long as the time started in 420E has not expired, the RAN 120 will not transition the UE away from CELL_DCH (e.g., even upon the receipt of Event 4b measurement reports, which conventionally would triggers the transition away from CELL_DCH). At some point, the timer expires at the RAN 120, 440E (e.g., as in 450A). This then triggers the RAN 120 to transition the given UE from CELL_DCH state to CELL_FACH state by sending a channel reconfiguration message on the DCH or HS-DSCH, 445E. The given UE receives the channel reconfiguration message of 445E and transitions itself to CELL_FACH state, 450E, after which the given UE transmits a RB reconfiguration complete message on the RACH to the RAN 120, 455E.

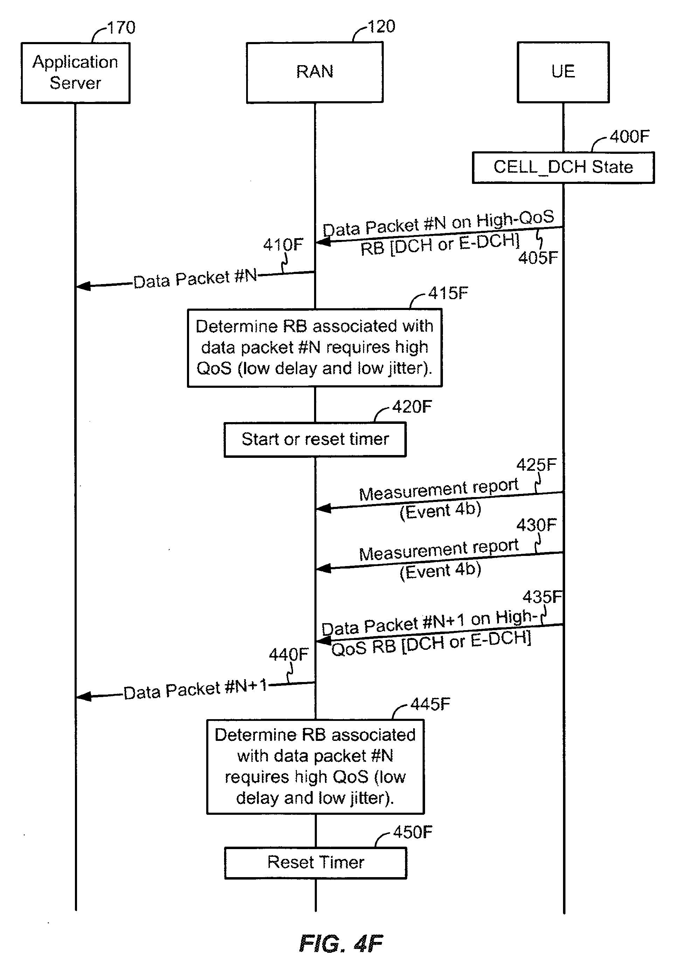

Referring to FIG. 4F, 400F through 430F correspond to 400E through 430E of FIG. 4E, and as such will not be described further for the sake of brevity. Next, before expiration of the timer, the given UE transmits data packet #N+1 on the reverse-link DCH or E-DCH on a high-QoS RB (e.g., an RB associated with the application server 170), 435F. The RAN 120 receives data packet #N+1 and forwards data packet #N+1 to the application server 170, 440F. The RAN 120 evaluates data packet #N+1 of 435F and determines data packet #N+1 to be mapped to the RB-ID of the application server 170, 445F, and the RAN 120 thereby either resets the timer, 450F, as in 455A of FIG. 4A.

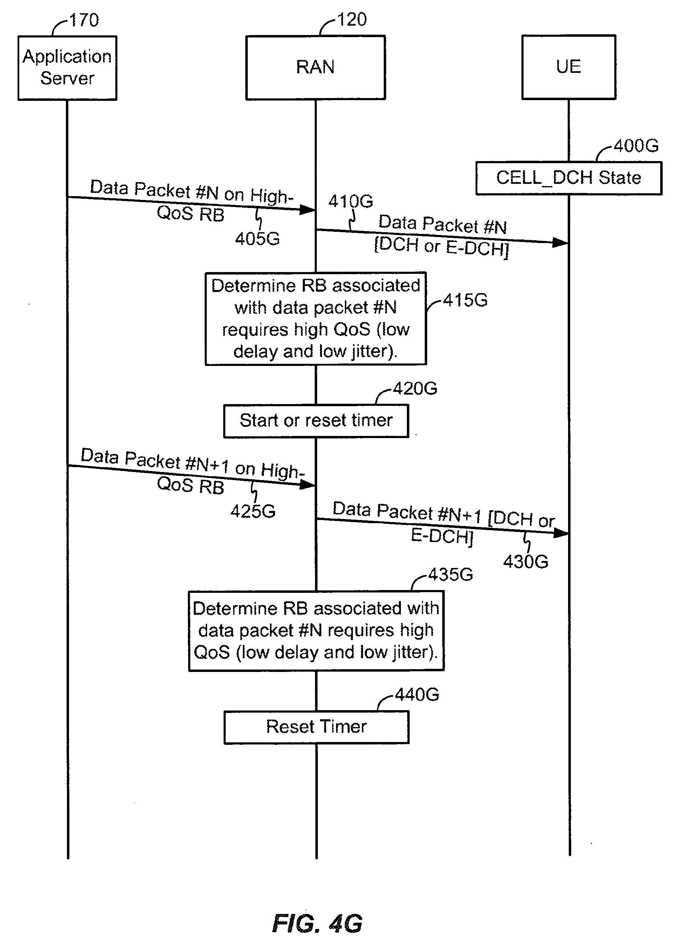

FIG. 4G is similar in some respects to FIG. 4E, except the UE shown in FIG. 4G more clearly corresponds to a target UE that is receiving data packets (e.g., media packets) during a communication session. In a further example, FIG. 4G can potentially represent a continuation of the process of FIG. 4D.

Referring to FIG. 4G, assume that the target UE is already in CELL_DCH state and engaged in a communication session with the application server 170, 400G. Accordingly, the application server 170 forwards a data packet #N to the RAN 120 on a high-QoS RB, 405G, and the RAN 120 transmits the data packet #N to the target UE on the forward-link DCH or E-DCH, 410G. The RAN 120 evaluates data packet #N of 405G and determines data packet #N to be mapped to the RB-ID of the application server 170, 415G, and the RAN 120 thereby either starts or resets the timer, 420G, as in FIG. 4A.

Next, the application server 170 forwards another data packet #N+1 to the RAN 120 on a high-QoS RB, 425G, and the RAN 120 transmits the data packet #N+1 to the target UE on the forward-link DCH or E-DCH, 430G. The RAN 120 evaluates data packet #N+1 of 425G and determines data packet #N+1 to be mapped to the RB-ID of the application server 170, 435G, and the RAN 120 thereby resets the timer, 440G.

While references in the above-described embodiments of the invention have generally used the terms 'call' and 'session' interchangeably, it will be appreciated that any call and/or session is intended to be interpreted as inclusive of actual calls between different parties, or alternatively to data transport sessions that technically may not be considered as 'calls'. Also, while above-embodiments have generally described with respect to PTT sessions, other embodiments can be directed to any type of communication session, such as a push-to-transfer (PTX) session, an emergency VoIP call, etc.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiment, disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods, sequences and/or algorithms described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium, In the alternative, the storage medium may be integral to the processor. The processor and the storage medium may reside in an ASIC. The ASIC may reside in a user terminal (e.g., access terminal). In the alternative, the processor and the storage medium may reside as discrete components in a user terminal.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combination of the above should also be included within the scope of computer-readable media.

While the foregoing disclosure shows illustrative embodiments of the invention, it should be noted that various changes and modifications could be made herein without departing from the scope of the invention as defined by the appended claims. The functions, steps and/or actions of the method claims in accordance with the embodiments of the invention described herein need not be performed in any particular order. Furthermore, although elements of the invention may be described or claimed in the singular, the plural is contemplated unless limitation to the singular is explicitly stated.

## Claims

1. A method of operating an access network configured to support communication sessions within a wireless communications system operating in accordance with a given wireless communication protocol, comprising
monitoring traffic, associated with a radio bearer of a given type, between a user equipment (UE) in a dedicated-channel state and an application server that is arbitrating a communication session between the UE and at least one other UE;
starting (425A) a timer having a given expiration period after the monitoring step detects a first data packet associated with a radio bearer of a given type;
determining (430A) whether one or more additional data packets associated with the UE are received before expiration of the timer; **characterized in that**
if no additional data packets are received before the expiration of the timer, transitioning (435A) the UE away from the dedicated-channel state upon expiration of the timer;
else if one or more additional data packets are received before expiration of the timer, evaluating (440A) the radio bearer associated with the one or more additional data packets;
if the evaluation step determines that at least one of the one or more additional data packets are associated with the radio bearer of the given type, resetting (455A) the timer and repeating the determining step;
else if the evaluation step determines that at least one of the one or more additional data packets are not associated with the radio bearer of the given type, the receipt of the one or more additional data packets does not function to reset the timer and the UE is transitioned away from the dedicated-channel state upon expiration of the timer; and
wherein the receipt of a data packet only containing a measurement report from the UE indicative of uplink traffic volume being below a given threshold does not transition the UE away from the dedicated-channel state before expiration of the timer.

2. The method of claim 1, wherein the transition of the UE away from the dedicated-channel state transitions the UE into CELL_FACH state, CELL_PCH state or URA_PCH state.

3. The method of claim 1,
wherein the UE previously sent a first portion of a call message configured to request set-up of the communication session by the application server,
wherein the access network transitioned the UE into the dedicated-channel state in response to the first portion of the call message, and
wherein the one or more additional data packets include a second portion of the call message sent by the UE and configured to request set-up of the communication session by the application server.

4. The method of claim 3, wherein the first and second portions of the call message correspond to first and second radio link control (RLC) packet data units (PDUs) of the call message.

5. The method of claim 1,
wherein the access network transitioned the UE into the dedicated-channel state in response to a call announce message configured to announce the communication session to the UE, and
wherein the one or more additional data packets include an acknowledge from the UE to the call announce message.

6. The method of claim 1, wherein the one or more additional data packets correspond to one or more multimedia data packets of the communication session that are transmitted by the UE and intended for the at least one other UE.

7. The method of claim 1, wherein the one or more additional data packets correspond to one or more multimedia data packets of the communication session received at the access network for transmission to the UE.

8. The method of claim 1, further comprising the initial steps of:
receiving, from the UE while the UE is not in the dedicated-channel state, at least a portion of the call message configured to request set-up of the communication session by the application server;
determining that the at least a portion of the call message is associated with the radio bearer of the given type; and
transitioning the UE into the dedicated-channel state.

9. The method of claim 1, further comprising the initial steps of:
receiving, from the application server while the UE is not in the dedicated-channel state, a call announce message configured to announce the communication session to the UE;
determining that the call announce message is associated with the radio bearer of the given type; and
transitioning the UE into the dedicated-channel state.

10. The method of claim 1, wherein the radio bearer of the given type corresponds to a radio bearer that is associated with a high priority level, high Quality of Service (QoS) requirements and/or delay-sensitive or low-latency traffic.

11. An access network configured to support communication sessions within a wireless communications system operating in accordance with a given wireless communication protocol, comprising
means for monitoring traffic, associated with a radio bearer of a given type, between a user equipment (UE) in a dedicated-channel state and an application server that is arbitrating a communication session between the UE and at least one other UE;
means for starting a timer having a given expiration period after the means for monitoring detects a first data packet associated with a radio bearer of a given type;
means for determining whether one or more additional data packets associated with the UE are received before expiration of the timer; **characterized in that**
if no additional data packets are received before the expiration of the timer, means for transitioning the UE away from the dedicated-channel state upon expiration of the timer;
else if one or more additional data packets are received before expiration of the timer, means for evaluating the radio bearer associated with the one or more additional data packets;
if the evaluation determines that at least one of the one or more additional data packets are associated with the radio bearer of the given type, means for resetting the timer and repeating the determination;
else if the evaluation determines that at least one of the one or more additional data packets are not associated with the radio bearer of the given type, the receipt of the one or more additional data packets does not function to reset the timer and means for transitioning the UE away from the dedicated-channel state upon expiration of the timer; and
wherein the receipt of a data packet only containing a measurement report from the UE indicative of uplink traffic volume being below a given threshold does not transition the UE away from the dedicated-channel state before expiration of the timer.

12. A non-transitory computer-readable storage medium containing instructions stored thereon, which, when executed by an access network configured to support communication sessions within a wireless communications system operating in accordance with a given wireless communication protocol, cause the access network to perform actions, the instructions comprising:
program code to monitor traffic, associated with a radio bearer of a given type, between a user equipment (UE) in a dedicated-channel state and an application server that is arbitrating a communication session between the UE and at least one other UE;
program code to start a timer having a given expiration period after the monitoring detects a first data packet associated with a radio bearer of a given type;
program code to determine whether one or more additional data packets associated with the UE are received before expiration of the timer; **characterized in that**
if no additional packets are received before expiration of the timer, program code to transition the UE away from the dedicated-channel state upon expiration of the timer;
if one or more additional data packets are received before expiration of the timer, program code to evaluate the radio bearer associated with the one or more additional data packets;
if the evaluation determines that at least one of the one or more additional data packets are associated with the radio bearer of the given type, program code to reset the timer and repeat the determination;
else if the evaluation determines that at least one of the one or more additional packets are not associated with the radio bearer of the given type, the receipt of the one or more additional data packets does not function to reset the timer and program code to transition the UE away from the dedicated-channel state upon expiration of the timer; and
wherein the receipt of a data packet only containing a measurement report from the UE indicative of uplink traffic volume being below a given threshold does not transition the UE away from the dedicated-channel state before expiration of the timer.

## Patentansprüche

1. Ein Verfahren zum Betreiben eines Zugangsnetzes, das konfiguriert ist, um Kommunikationssitzungen in einem drahtlosen Kommunikationssystem, das gemäß einem gegebenen Drahtloskommunikationsprotokoll betrieben wird, zu unterstützen, wobei das Verfahren folgende Schritte aufweist:
Überwachen des Verkehrs, der mit einem Funkträger eines gegebenen Typs assoziiert ist, zwischen einem Benutzergerät, User Equipment bzw. UE, in einem dedizierten Kanalzustand und einem Anwendungsserver, der eine Kommunikationssitzung zwischen dem UE und wenigstens einem anderen UE verhandelt,
Starten (425A) eines Timers, der eine gegebene Ablaufperiode aufweist, nachdem der Überwachungsschritt ein erstes Datenpaket erfasst, das mit einem Funkträger eines gegebenen Typs assoziiert ist,
Bestimmen (430A), ob ein oder mehrere zusätzliche mit dem UE assoziierte Datenpakete vor dem Ablauf des Timers empfangen werden,
**gekennzeichnet durch**:
wenn keine zusätzlichen Datenpakete vor dem Ablauf des Timers empfangen werden, Versetzen (435A) des UE weg von dem dedizierten Kanalzustand nach Ablauf des Timers,
ansonsten, wenn ein oder mehrere zusätzliche Datenpakete vor dem Ablauf des Timers empfangen werden, Bewerten (440A) des Funkträgers, der mit dem einen oder den mehreren zusätzlichen Datenpaketen assoziiert ist,
wenn der Bewertungsschritt bestimmt, dass wenigstens eines des einen oder der mehreren zusätzlichen Datenpakete mit dem Funkträger des gegebenen Typs assoziiert ist, Zurücksetzen (455A) des Timers und Wiederholen des Bestimmungsschritts,
ansonsten, wenn der Bewertungsschritt bestimmt, dass wenigstens eines des einen oder der mehreren zusätzlichen Datenpakete nicht mit dem Funkträger des gegebenen Typs assoziiert ist, führt der Empfang des einen oder der mehreren zusätzlichen Datenpakete nicht dazu, dass der Timer zurückgesetzt wird, und wird das UE nach Ablauf des Timers weg von dem dedizierten Kanalzustand versetzt,
wobei der Empfang eines Datenpakets, das nur einen Messbericht von dem UE enthält, der angibt, dass das Aufwärtsstrecken-Verkehrs-volumen unter einem bestimmten Schwellwert liegt, keine Versetzung des UE weg von dem dedizierten Kanalzustand vor Ablauf des Timers zur Folge hat.

2. Verfahren nach Anspruch 1, wobei das Versetzen des UE weg von dem dedizierten Kanalzustand ein Versetzen des UE zu einem CELL_FACH-Zustand, CELL_PCH-Zustand oder URA_PCH-Zustand ist.

3. Verfahren nach Anspruch 1,
wobei das UE zuvor einen ersten Teil einer Anrufnachricht gesendet hat, der konfiguriert ist, um eine Einrichtung der Kommunikationssitzung durch den Anwendungsserver anzufragen,
wobei das Zugangsnetz das UE in Antwort auf den ersten Teil der Anrufnachricht zu dem dedizierten Kanalzustand versetzt hat, und
wobei das eine oder die mehreren zusätzlichen Datenpakete einen zweiten Teil der Anrufnachricht enthalten, der durch das UE gesendet wird und konfiguriert ist, um eine Einrichtung der Kommunikationssitzung durch den Anwendungsserver anzufragen.

4. Verfahren nach Anspruch 3, wobei der erste und der zweite Teil der Anrufnachricht ersten und zweiten Funkverbindungssteuerung (Radio Link Control bzw. RLC)-Paketdateneinheiten (Packet Data Units bzw. PDUs) der Anrufnachricht entsprechen.

5. Verfahren nach Anspruch 1,
wobei das Zugangsnetz das UE in Antwort auf eine Anrufankündigungsnachricht, die für das Ankündigen der Kommunikationssitzung für das UE konfiguriert ist, zu dem dedizierten Kanalzustand versetzt hat,
wobei das eine oder die mehreren zusätzlichen Datenpakete eine Bestätigung von dem UE in Bezug auf die Anrufankündigungsnachricht enthalten.

6. Verfahren nach Anspruch 1, wobei das eine oder die mehreren zusätzlichen Datenpakete einem oder mehreren Multimedia-Datenpaketen der Kommunikationssitzung entsprechen, die durch das UE gesendet werden und für wenigstens ein anderes UE bestimmt sind.

7. Verfahren nach Anspruch 1, wobei das eine oder die mehreren zusätzlichen Datenpakete einem oder mehreren Multimedia-Datenpaketen der Kommunikationssitzung entsprechen, die an dem Zugangsnetz für das Senden an das UE empfangen werden.

8. Verfahren nach Anspruch 1, das weiterhin die folgenden anfänglichen Schritte aufweist:
Empfangen, von dem UE, während sich das UE nicht in dem dedizierten Kanalzustand befindet, wenigstens eines Teils der Anrufnachricht, der konfiguriert ist, um eine Einrichtung der Kommunikationssitzung durch den Anwendungsserver anzufragen,
Bestimmen, dass der wenigstens eine Teil der Anrufnachricht mit dem Funkträger des gegebenen Typs assoziiert ist, und
Versetzen des UE zu dem dedizierten Kanalzustand.

9. Verfahren nach Anspruch 1, das weiterhin die folgenden anfänglichen Schritte aufweist:
Empfangen, von dem Anwendungsserver, während sich das UE nicht in dem dedizierten Kanalzustand befindet, einer Anrufankündigungsnachricht, die konfiguriert ist, um die Kommunikationssitzung für das UE anzukündigen,
Bestimmen, dass die Anrufankündigungsnachricht mit dem Funkträger des gegebenen Typs assoziiert ist, und
Versetzen des UE zu dem dedizierten Kanalzustand.

10. Verfahren nach Anspruch 1, wobei der Funkträger des gegebenen Typs einem Funkträger entspricht, der mit einer hohen Prioritätsstufe, mit hohen Dienstgüte (QoS)-Anforderungen und/oder mit einem in Bezug auf Verzögerungen empfindlichen oder niederlatenten Verkehr assoziiert ist.

11. Ein Zugangsnetz, das konfiguriert ist, um Kommunikationssitzungen in einem drahtlosen Kommunikationssystem zu unterstützen, das gemäß einem gegebenen Drahtloskommunikationsprotokoll betrieben wird, wobei das Zugangsnetz aufweist:
Mittel zum Überwachen des Verkehrs, der mit einem Funkträger eines gegebenen Typs assoziiert ist, zwischen einem Benutzergerät, User Equipment bzw. UE, in einem dedizierten Kanalzustand und einem Anwendungsserver, der eine Kommunikationssitzung zwischen dem UE und wenigstens einem anderen UE verhandelt,
Mittel zum Starten eines Timers, der eine gegebene Ablaufperiode aufweist, nachdem die Mittel zum Überwachen ein erstes Datenpaket erfassen, das mit einem Funkträger eines gegebenen Typs assoziiert ist,
Mittel zum Bestimmen, ob ein oder mehrere zusätzliche mit dem UE assoziierte Datenpakete vor dem Ablauf des Timers empfangen werden,
**gekennzeichnet durch**:
wenn keine zusätzlichen Datenpakete vor dem Ablauf des Timers empfangen werden, Mittel zum Versetzen des UE weg von dem dedizierten Kanalzustand nach Ablauf des Timers,
ansonsten, wenn ein oder mehrere zusätzliche Datenpakete vor dem Ablauf des Timers empfangen werden, Mittel zum Bewerten des Funkträgers, der mit dem einen oder den mehreren zusätzlichen Datenpaketen assoziiert ist,
wenn die Bewertung bestimmt, dass wenigstens eines des einen oder der mehreren zusätzlichen Datenpakete mit dem Funkträger des gegebenen Typs assoziiert ist, Mittel zum Zurücksetzen des Timers und zum Wiederholen der Bestimmung,
ansonsten, wenn die Bewertung bestimmt, dass wenigstens eines des einen oder der mehreren zusätzlichen Datenpakete nicht mit dem Funkträger des gegebenen Typs assoziiert ist, führt der Empfang des einen oder der mehreren zusätzlichen Datenpakete nicht dazu, dass der Timer zurückgesetzt wird, und Mittel zum Versetzen des UE weg von dem dedizierten Kanalzustand nach Ablauf des Timers,
wobei der Empfang eines Datenpakets, das nur einen Messbericht von dem UE enthält, der angibt, dass das Aufwärtsstrecken-Verkehrs-volumen unter einem bestimmten Schwellwert liegt, keine Versetzung des UE weg von dem dedizierten Kanalzustand vor Ablauf des Timers zur Folge hat.

12. Ein nicht-transitorisches, computerlesbares Speichermedium mit darin gespeicherten Befehlen, die bei einer Ausführung durch ein Zugangsnetz, das konfiguriert ist, um Kommunikationssitzungen in einem drahtlosen Kommunikationssystem, das gemäß einem gegebenen Drahtloskommunikationsprotokoll betrieben wird, zu unterstützen, veranlassen, dass das Zugangsnetz Aktionen durchführt, wobei die Befehle aufweisen:
Programmcode zum Überwachen des Verkehrs, der mit einem Funkträger eines gegebenen Typs assoziiert ist, zwischen einem Benutzergerät, User Equipment bzw. UE, in einem dedizierten Kanalzustand und einem Anwendungsserver, der eine Kommunikationssitzung zwischen dem UE und wenigstens einem anderen UE verhandelt,
Programmcode zum Starten eines Timers, der eine gegebene Ablaufperiode aufweist, nachdem der Überwachungsschritt ein erstes Datenpaket erfasst, das mit einem Funkträger eines gegebenen Typs assoziiert ist,
Programmcode zum Bestimmen, ob ein oder mehrere zusätzliche mit dem UE assoziierte Datenpakete vor dem Ablauf des Timers empfangen werden,
**gekennzeichnet durch**:
wenn keine zusätzlichen Datenpakete vor dem Ablauf des Timers empfangen werden, Programmcode zum Versetzen des UE weg von dem dedizierten Kanalzustand nach Ablauf des Timers,
wenn ein oder mehrere zusätzliche Datenpakete vor dem Ablauf des Timers empfangen werden, Programmcode zum Bewerten des Funkträgers, der mit dem einen oder den mehreren zusätzlichen Datenpaketen assoziiert ist,
wenn die Bewertung bestimmt, dass wenigstens eines des einen oder der mehreren zusätzlichen Datenpakete mit dem Funkträger des gegebenen Typs assoziiert ist, Programmcode zum Zurücksetzen des Timers und zum Wiederholen der Bestimmung,
ansonsten, wenn der Bewertungsschritt bestimmt, dass wenigstens eines des einen oder der mehreren zusätzlichen Datenpakete nicht mit dem Funkträger des gegebenen Typs assoziiert ist, führt der Empfang des einen oder der mehreren zusätzlichen Datenpakete nicht dazu, dass der Timer zurückgesetzt wird, und Programmcode zum Versetzen des UE weg von dem dedizierten Kanalzustand nach Ablauf des Timers, und
wobei der Empfang eines Datenpakets, das nur einen Messbericht von dem UE enthält, der angibt, dass das Aufwärtsstrecken-Verkehrs-volumen unter einem bestimmten Schwellwert liegt, keine Versetzung des UE weg von dem dedizierten Kanalzustand vor Ablauf des Timers zur Folge hat.

## Revendications

1. Procédé pour actionner un réseau d'accès agencé pour prendre en charge des sessions de communication dans un système de communication sans fil fonctionnant selon un protocole de communication sans fil donné, comprenant les étapes suivantes :
surveiller du trafic, associé à un support radio d'un type donné, entre un équipement d'utilisateur (UE) dans un état de canal dédié et un serveur d'application qui est en train d'arbitrer une session de communication entre l'UE et au moins un autre UE ;
démarrer (425A) un minuteur ayant une période d'expiration donnée après que l'étape de surveillance à détecté un premier paquet de données associé à un support radio d'un type donné ;
déterminer (430A) si un ou plusieurs paquets de données additionnels associés à l'UE sont reçus avant l'expiration du minuteur ; **caractérisé en ce que**
si aucun paquet de données additionnel n'est reçu avant l'expiration du minuteur, faire sortir (435A) l'UE de l'état de canal dédié à l'expiration du minuteur ;
sinon, si un ou plusieurs paquets de données additionnels sont reçus avant l'expiration du minuteur, évaluer (440A) le support radio associé auxdits un ou plusieurs paquets de données additionnels ;
si l'étape d'évaluation détermine qu'au moins l'un desdits un ou plusieurs paquets de données additionnels est associé au support radio du type donné, réinitialiser (455A) le minuteur et répéter l'étape de détermination ;
sinon si l'étape d'évaluation détermine qu'au moins l'un desdits un ou plusieurs paquets de données additionnels n'est pas associé au support radio du type donné, la réception desdits un ou plusieurs paquets de données additionnels n'opère pas pour réinitialiser le minuteur et l'UE est sorti de l'état de canal dédié à l'expiration du minuteur ; et
dans lequel la réception d'un paquet de données contenant seulement un rapport de mesure provenant de l'UE indiquant que le volume de trafic de liaison montante est en dessous d'un seuil donné ne fait pas sortir l'UE de l'état de canal dédié avant l'expiration du minuteur.

2. Procédé selon la revendication 1, dans lequel le fait de faire sortir l'UE de l'état de canal dédié fait passer l'UE dans l'état CELL_FACH, l'état CELL_PCH ou l'état URA_PCH.

3. Procédé selon la revendication 1,
dans lequel l'UE a envoyé précédemment une première portion d'un message d'appel agencée pour demander l'établissement de la session de communication par le serveur d'application,
dans lequel le réseau d'accès a fait passer l'UE dans l'état de canal dédié en réponse à la première portion du message d'appel, et
dans lequel lesdits un ou plusieurs paquets de données additionnels comprennent une deuxième portion du message d'appel envoyé par l'UE et agencée pour demander l'établissement de la session de communication par le serveur d'application.

4. Procédé selon la revendication 3, dans lequel les première et deuxième portions du message d'appel correspondent à des première et deuxième unités de paquets de données (PDU) de contrôle de liaison radio (RLC) du message d'appel.

5. Procédé selon la revendication 1,
dans lequel le réseau d'accès a fait passer l'UE dans l'état de canal dédié en réponse à un message d'annonce d'appel agencé pour annoncer la session de communication à l'UE, et
dans lequel lesdits un ou plusieurs paquets de données additionnels comprennent un accusé de réception provenant de l'UE au message d'annonce d'appel.

6. Procédé selon la revendication 1, dans lequel lesdits un ou plusieurs paquets de données additionnels correspondent à un ou plusieurs paquets de données multimédia de la session de communication qui sont émis par l'UE et destinés audit au moins un autre UE.

7. Procédé selon la revendication 1, dans lequel lesdits un ou plusieurs paquets de données additionnels correspondent à un ou plusieurs paquets de données multimédia de la session de communication reçus au niveau du réseau d'accès pour transmission à l'UE.

8. Procédé selon la revendication 1, comprenant en outre les étapes initiales suivantes :
recevoir, à partir de l'UE pendant que l'UE n'est pas dans l'état de canal dédié, au moins une portion du message d'appel agencée pour demander l'établissement de la session de communication par le serveur d'application ;
déterminer que ladite au moins une portion du message d'appel est associée au support radio du type donné ; et
faire passer l'UE dans l'état de canal dédié.

9. Procédé selon la revendication 1, comprenant en outre les étapes initiales suivantes :
recevoir, à partir du serveur d'application pendant que l'UE n'est pas dans l'état de canal dédié, un message d'annonce d'appel agencé pour annoncer la session de communication à l'UE ;
déterminer que le message d'annonce d'appel est associé au support radio du type donné ; et
faire passer l'UE dans l'état de canal dédié.

10. Procédé selon la revendication 1, dans lequel le support radio du type donné correspond à un support radio qui est associé à un niveau de priorité élevé, à des exigences de Qualité de Service (QoS) élevées et/ou à du trafic sensible au retard ou à faible retard.

11. Réseau d'accès agencé pour prendre en charge des sessions de communication dans un système de communication sans fil fonctionnant selon un protocole de communication sans fil donné, comprenant :
des moyens pour surveiller du trafic, associé à un support radio d'un type donné, entre un équipement d'utilisateur (UE) dans un état de canal dédié et un serveur d'application qui est en train d'arbitrer une session de communication entre l'UE et au moins un autre UE ;
des moyens pour démarrer un minuteur ayant une période d'expiration donnée après que les moyens pour surveiller ont détecté un premier paquet de données associé à un support radio d'un type donné ;
des moyens pour déterminer si un ou plusieurs paquets de données additionnels associés à l' UE sont reçus avant l'expiration du minuteur ; **caractérisé par**
si aucun paquet de données additionnel n'est reçu avant l'expiration du minuteur, des moyens pour faire sortir l'UE de l'état de canal dédié à l'expiration du minuteur ;
sinon, si un ou plusieurs paquets de données additionnels sont reçus avant l'expiration du minuteur, des moyens pour évaluer le support radio associé auxdits un ou plusieurs paquets de données additionnels ;
si l'évaluation détermine qu'au moins l'un desdits un ou plusieurs paquets de données additionnels est associé au support radio du type donné, des moyens pour réinitialiser le minuteur et répéter la détermination ;
sinon si l'évaluation détermine qu'au moins l'un desdits un ou plusieurs paquets de données additionnels n'est pas associé au support radio du type donné, la réception desdits un ou plusieurs paquets de données additionnels n'opère pas pour réinitialiser le minuteur, et des moyens pour faire sortir l'UE de l'état de canal dédié à l'expiration du minuteur ; et
dans lequel la réception d'un paquet de données contenant seulement un rapport de mesure provenant de l'UE indiquant que le volume de trafic de liaison montante est en dessous d'un seuil donné ne fait pas sortir l'UE de l'état de canal dédié avant l'expiration du minuteur.

12. Support de mémorisation non transitoire lisible par un ordinateur contenant des instructions mémorisées sur lui qui, lorsqu'elles sont exécutées par un réseau d'accès agencé pour prendre en charge des sessions de communication dans un système de communication sans fil fonctionnant selon un protocole de communication sans fil donné, amènent le réseau d'accès à réaliser des actions, les instructions comprenant :
du code de programme pour surveiller du trafic, associé à un support radio d'un type donné, entre un équipement d'utilisateur (UE) dans un état de canal dédié et un serveur d'application qui est en train d'arbitrer une session de communication entre l'UE et au moins un autre UE ;
du code de programme pour démarrer un minuteur ayant une période d'expiration donnée après que la surveillance a détecté un premier paquet de données associé à un support radio d'un type donné ;
du code de programme pour déterminer si un ou plusieurs paquets de données additionnels associés à l'UE sont reçus avant l'expiration du minuteur ; **caractérisé par**
si aucun paquet de données additionnel n'est reçu avant l'expiration du minuteur, du code de programme pour faire sortir l'UE de l'état de canal dédié à l'expiration du minuteur ;
si un ou plusieurs paquets de données additionnels sont reçus avant l'expiration du minuteur, du code de programme pour évaluer le support radio associé auxdits un ou plusieurs paquets de données additionnels ;
si l'évaluation détermine qu'au moins l'un desdits un ou plusieurs paquets de données additionnels est associé au support radio du type donné, du code de programme pour réinitialiser le minuteur et répéter la détermination ;
sinon si l'évaluation détermine qu'au moins l'un desdits un ou plusieurs paquets de données additionnels n'est pas associé au support radio du type donné, la réception desdits un ou plusieurs paquets de données additionnels n'opère pas pour réinitialiser le minuteur, et du code de programme pour faire sortir l'UE de l'état de canal dédié à l'expiration du minuteur ; et
dans lequel la réception d'un paquet de données contenant seulement un rapport de mesure provenant de l'UE indiquant que le volume de trafic de liaison montante est en dessous d'un seuil donné ne fait pas sortir l'UE de l'état de canal dédié avant l'expiration du minuteur.
